# EUROPEAN PATENT APPLICATION

(11) **EP 4 261 669 A1**
(43) Date of publication of application: **18.10.2023**
(21) Application number: 22739644.7
(22) Date of filing: 12.01.2022
(51) Int. Cl.: G06F 3/04883, G06F 3/0354, G06F 3/038, G06F 3/0485

(54) **ELECTRONIC DEVICE, AND OPERATING METHOD OF ELECTRONIC DEVICE**

(30) Priority: 12.01.2021 KR 20210003845
(71) Applicant: Samsung Electronics Co., Ltd., Suwon-si, Gyeonggi-do 16677 (KR)
(72) Inventor: KWON, Zion, Suwon-si, Gyeonggi-do 16677 (KR); SON, Seoyoung, Suwon-si, Gyeonggi-do 16677 (KR); SONG, Iseul, Suwon-si, Gyeonggi-do 16677 (KR); YOO, Jaein, Suwon-si, Gyeonggi-do 16677 (KR); LEE, Seungchan, Suwon-si, Gyeonggi-do 16677 (KR); LEE, Hyeonseung, Suwon-si, Gyeonggi-do 16677 (KR)
(74) Representative: Arnold & Siedsma
(86) International application number: PCT/KR2022/000520
(87) International publication number: WO 2022/154449

(57) **Abstract**

An electronic device according to one embodiment disclosed in the present document may comprise: an extendable and reducible display; a memory; and a processor operatively connected to the display and the memory. According to the one embodiment, the memory can comprise instructions that allow, during the execution thereof, the processor to: recognize a first writing input received from a user through the reduced display; display, on the reduced display, one or more first strokes corresponding to the received first writing input; change the display into an extended state on the basis of a designated input; display, while the display is extended, a first user interface indicating the last stroke from among the one or more first strokes; recognize, while the display is extended, that a second stroke corresponding to a second writing input is related to the last stroke of the one or more first strokes, if the second writing input is received from the user within the designated distance from the point at which the first user interface is displayed; and connect the second stroke to the last stroke to display the second stroke on the extended display. Other various embodiments identified through the specification are possible.

## Description

### [Technical Field]

Various embodiments disclosed in the disclosure are related to an electronic device and an operating method thereof.

### [Background Art]

Recently, an electronic device may have various form factors. Depending on the form factor of the electronic device, a structure of a display may also be changed in various ways. In particular, an electronic device having a form factor in which a size of the display changes, such as a flexible device, a slidable device, a foldable device, a rollable device, or a multi foldable device, is being developed.

### [Disclosure]

### [Technical Problem]

Various embodiments disclosed in the disclosure are to provide an electronic device that, when a form factor of the electronic device changes, adjusts a property of content input to a display after the form factor changes.

Various embodiments disclosed in the disclosure are to provide an electronic device that, when a form factor of the electronic device changes, may easily identify content before the form factor changes and content after the form factor changes.

### [Technical Solution]

An electronic device according to one embodiment disclosed in the disclosure includes a display capable of being expanded and reduced, a memory, and a processor operatively connected to the display and the memory. According to one embodiment, the memory includes instructions that, when executed, cause the processor to recognize a first handwriting input received from a user via the display in a reduced state, display at least one first stroke corresponding to the received first handwriting input on the display in the reduced state, change the display to an expanded state based on a specified input, display a first user interface indicating a last stroke among the at least one first stroke in the expanded state of the display, recognize a second stroke corresponding to a second handwriting input as related to the last stroke among the at least one first stroke when the second handwriting input is received from the user within a specified distance from a point where the first user interface is displayed in the expanded state of the display, and display the second stroke so as to be connected to the last stroke on the expanded display.

In addition, an operating method of an electronic device including a display capable of being reduced or expanded according to one embodiment disclosed in the disclosure includes recognizing a first handwriting input received from a user via the display in a reduced state, displaying at least one first stroke corresponding to the received first handwriting input on the display in the reduced state, expanding the display based on a specified input, displaying a first user interface indicating a last stroke among the at least one first stroke in an expanded state of the display, recognizing a second stroke corresponding to a second handwriting input as related to the last stroke among the at least one first stroke when the second handwriting input is received within a specified distance from a point where the first user interface is displayed in the expanded state of the display, and displaying the second stroke so as to be connected to the last stroke on the expanded display.

### [Advantageous Effects]

According to the embodiments disclosed in the disclosure, the electronic device that, when the form factor of the electronic device changes, adjusts the property of the content input to the display after the form factor changes may be provided.

According to the embodiments disclosed in the disclosure, the electronic device that, when the form factor of the electronic device changes, may easily identify the content before the form factor changes and the content after the form factor changes may be provided.

In addition, various effects identified directly or indirectly through the disclosure may be provided.

### [Description of Drawings]

FIG. 1 is a block diagram of an electronic device in a network environment according to various embodiments.
FIG. 2 is a diagram showing an example of an outer appearance of an electronic device according to one embodiment.
FIG. 3 is an exploded perspective view showing components of an electronic device in FIG. 2.
FIG. 4 illustrates a form factor of an electronic device according to various embodiments as an example.
FIG. 5 is a block diagram of an electronic device according to various embodiments.
FIG. 6 is a diagram illustrating an operation of an electronic device according to various embodiments.
FIG. 7 is a diagram illustrating an operation of an electronic device according to various embodiments.
FIG. 8 illustrates an example in which an electronic device recognizes two or more strokes as related to each other, according to various embodiments.
FIG. 9 is a diagram illustrating an operation of an electronic device according to various embodiments.
FIGS. 10A and 10B are diagrams illustrating an operation of the electronic device according to various embodiments.
FIG. 11 is a diagram illustrating an operation of an electronic device according to various embodiments.
FIG. 12 is a flowchart of an operating method of an electronic device including a display in which a display area may be expanded and reduced, according to various embodiments.

In connection with the description of the drawings, the same or similar reference numerals may be used for the same or similar components.

### [Mode for Invention]

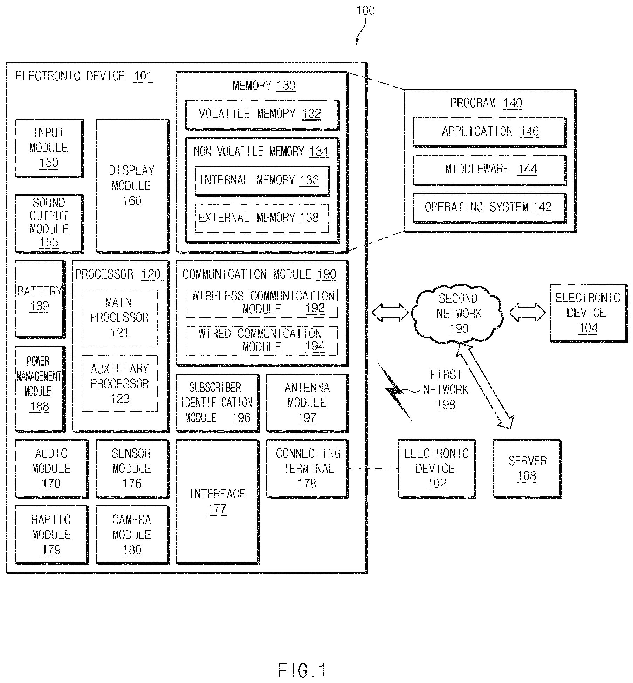

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

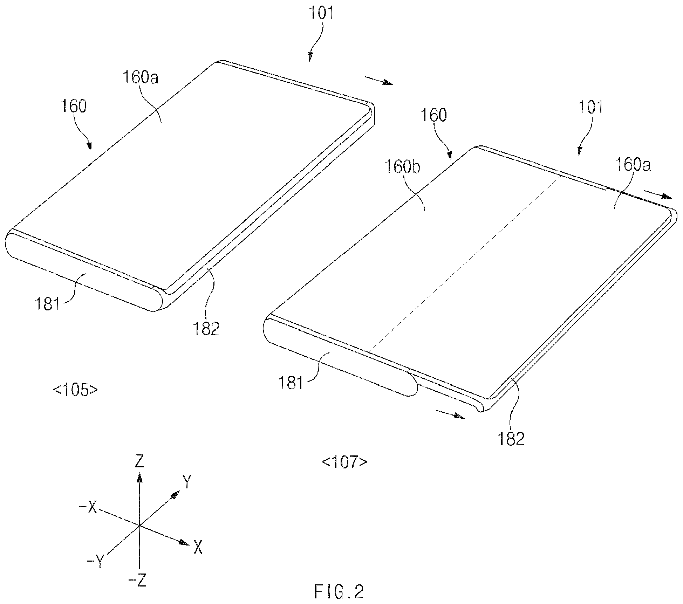

FIG. 2 is a diagram showing an example of an outer appearance of an electronic device according to one embodiment.

Referring to FIG. 2, the electronic device 101 according to one embodiment may include the display 160 (e.g., a flexible display at least partially having flexibility), a first housing 181, and a second housing 182. For example, the first housing 181 may serve as a fixed cover for accommodating therein the second housing and a portion of the display. The second housing 182 may serve as a sliding cover to which one side of the display 160 is fixed. The second housing 182 may be moved in a first direction (e.g., an X axis direction) or in a second direction (e.g., a -X axis direction opposite to the first direction) based on the first housing 181. When the first housing 181 and the second housing 182 overlap each other by a first width as in a state 103, a first display area 160a of a first size may be disposed to face upward (e.g., a Z axis direction). Alternatively, in the state 103, the display 160 may include the first display area 160a of the first size visually exposed to the outside.

According to one embodiment, in the state 103, the first housing 181 may be disposed to surround at least a portion in the second direction (e.g., the -X axis direction), at least a portion in a third direction (e.g., a Y axis direction), at least a portion in a fourth direction (e.g., a -Y axis direction), and at least a portion in a fifth direction (e.g., a -Z axis direction or a direction opposite to the Z axis direction) of the first display area 160a. The second housing 182 may be disposed to surround at least a portion in the first direction (e.g., the X axis direction), at least a portion in the third direction (e.g., the Y axis direction), at least a portion in the fourth direction (e.g., the -Y axis direction), and at least a portion in the fifth direction (e.g., the -Z axis direction) of the first display area 160a.

According to one embodiment, in the state 103, at least a portion of a second display area 160b extending from the first display area 160a may be disposed so as to be rolled inside at least one of the first housing 181 and the second housing 182 or to be unfolded. In this state, a surface on which pixels of the first display area 160a irradiate light may be disposed to face forward (e.g., the Z axis direction), and at least a portion of an upper surface of the second display area 160b where pixels are disposed may be disposed to face backward (e.g., the -Z axis direction). A portion of the second display area 160b may be disposed so as to be bent.

According to one embodiment, when the second housing 182 is moved in the first direction (e.g., the X axis direction) based on the first housing 181, the visually exposed area of the display 160 may be expanded. For example, when the first housing 181 and the second housing 182 overlap each other by a second width (e.g., a size smaller than the first width) as in a state 107 (e.g., a state in which the second housing 182 has performed a sliding operation to expand an area of the display 160), the display 160 may include the first display area 160a of the first size visually exposed to the outside (or facing upward (e.g., the Z axis direction)), and the second display area 160b of a second size. In the state 107, the first size of the first display area 160a and the second size of the second display area 160b may be equal to each other. Alternatively, the first size may be greater than the second size. According to various embodiments, the second size may vary based on a sliding operation distance or a moving distance of the second housing 182.

According to one embodiment, the display 160 may maintain the state in which the portion thereof is rolled state in the state 103, and may be in a state in which at least the portion thereof in the rolled state is unfolded in the state 107. For example, in the state 107, the first housing 181 may be disposed to surround at least a portion in the second direction (e.g., the -X axis direction), at least a portion in the third direction (e.g., the Y axis direction), at least a portion in the fourth direction (e.g., the -Y axis direction), and at least a portion in the fifth direction (e.g., the -Z axis direction or the direction opposite to the Z axis direction) of the second display area 160b.

According to various embodiments, the second housing 182 may be at least partially connected to an inner side of the first housing 181 and may slide in one of the first direction (e.g., the X axis direction) and the second direction (e.g., the -X axis direction) along an inner surface of the first housing 181. While the first housing 181 and the second housing 182 slide, the first housing 181 and the second housing 182 may be disposed to surround an edge of the display 160. Inside the first housing 181 and the second housing 182, various electronic elements related to driving of the display 160, electronic elements related to various user functions supported by the electronic device 101, and/or a battery may be disposed.

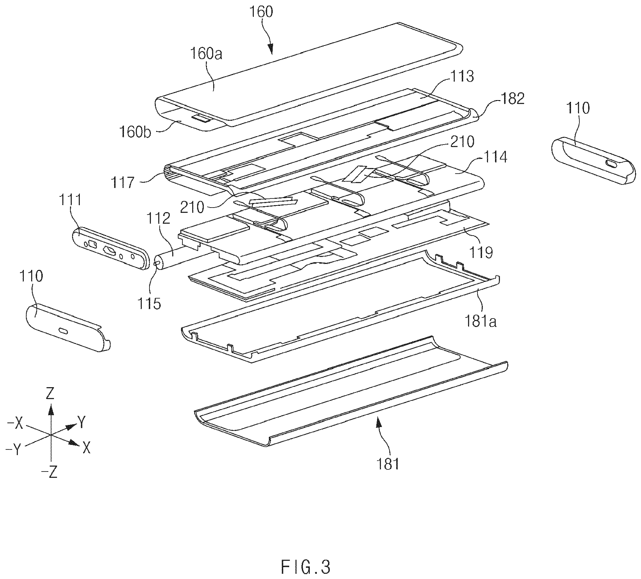

FIG. 3 is an exploded perspective view showing components of an electronic device in FIG. 2.

Referring to FIG. 3, the electronic device 101 according to one embodiment may include the display 160, a panel support member 117, a display support member 113, a support structure 114, a sliding support member 111, an actuator 112, an elastic module 210, a printed circuit board 119, the first housing 181, and the second housing 182.

According to one embodiment, in the display 160, a plurality of pixels may be arranged in a matrix form, and at least a portion of the display 160 may be in a flexible form. For example, the display 160 may include a panel layer where the plurality of pixels are arranged and a screen is displayed, and an outer protective layer disposed on the panel layer. The outer protective layer may be formed of a polymer structure (e.g., polyimide) or as glass. Additionally, the display 160 may further include a touch panel layer. As described in FIG. 1, the display 160 may include the first display area 160a and the second display area 160b. At least the portion of the second display area 160b may be disposed so as to be rolled inside the first housing 181 in the state 103 in FIG. 1, and may be visually exposed to the outside of the first housing 181 in the state 107. While at least the portion of the second display area 160b is rolled and disposed so as to be bent around a rolling shaft 115 (or a rolling gear assembly or a rolling shaft member), a remaining portion of the second display area 160b may be disposed at the rear of the first display area 160a.

According to one embodiment, one side of the display 160 (e.g., at least a portion of the second display area 160b) may be mounted inside at least one of the first housing 181 and the second housing 182. In this state, a distal end at the one side of the display 160 disposed inside the electronic device 101 may be fastened to an elastic member. For example, while the second display area 160b of the display 160 is exposed to the outside, as an elastic force of the elastic member may act as a tension on the display 160, a repulsive force in the bent section of the display 160 may be offset. Accordingly, the portion where the display 160 is rolled may be maintained uniformly.

According to one embodiment, the display support member 113 may support the display 160 with a specified rigidity. For example, at least a portion of the display support member 113 may be made of aluminum or an aluminum alloy, and a surface of the display support member 113 facing the display 160 may be formed flat. For example, at least a portion of the display support member 113 may be formed as an injection-molded material (e.g., a structure containing plastic or magnesium). In the state 103, a first surface (e.g., a surface observed in the Z axis direction) of the display support member 113 may be disposed to face a rear surface (e.g., a surface observed in the -Z axis direction) of the first display area 160a, and a second surface (e.g., a surface observed in the -Z axis direction) of the display support member 113 may be disposed to face an upper surface (e.g., a surface observed in the Z axis direction) of the support structure 114.

According to one embodiment, at least a portion of the display support member 113 (or the display 160) may be coupled to the second housing 182 and slide based on the sliding operation of the second housing 182. Alternatively, the second housing 182 may be moved by the actuator 112. In this regard, a separate physical button capable of instructing driving of the actuator may be disposed on the electronic device 101 or a menu related to the driving of the actuator may be displayed on a display screen of the display 160. While the second housing 182 moves in the first direction (e.g., the X axis direction), at least a portion of the panel support member 117 may move in the first direction (e.g., the X axis direction), and an arrangement direction of the second display area 160b of the display 160 fixed to the panel support member 117 may be changed from a sixth direction (e.g., the -Z axis direction) to the fifth direction (the Z axis direction). While the second housing 182 moves in the first direction (e.g., the X axis direction), at least the portion of the panel support member 117 may move toward a side surface of the second housing 182 from a state of being disposed on a lower surface of the second housing 182.

According to one embodiment, the panel support member 117 may have a shape in which a plurality of pillars (or protrusions, long bars, and slates) having a certain length in the third direction (e.g., the Y axis direction) are arranged with a certain spacing therebetween. At least the portion of the panel support member 117 may form a trajectory, and may move (or slide) a portion of the display (e.g., the second display area 160b) disposed on the trajectory. A length of one side of the protrusions may correspond to a length of one side of the display 160. The panel support member 117 may be disposed to surround at least a portion of the support structure 114. The plurality of protrusions constituting the panel support member 117 may be formed such that a surface of the panel support member 117 facing a rear surface of the display 160 is disposed flat and a portion of the panel support member 117 disposed to face the support structure 114 (e.g., a portion facing the rolling shaft 115) protrudes. For example, ridges and valleys of gears may be repeatedly formed at a lower surface of the panel support member 117 (e.g., one surfaces of the protrusions facing the rolling shaft 115). Based on the sliding operation, among the plurality of protrusions constituting the panel support member 117, protrusions disposed on the upper surface or a lower surface of the support structure 114 may be continuously arranged with other neighboring protrusions to form a flat surface. Among the plurality of protrusions constituting the panel support member 117, protrusions disposed at a position facing the rolling shaft 115 may be arranged so as to be spaced apart from neighboring protrusions by a predetermined spacing. The panel support member 117 may include a connecting chain or a connecting shaft for connecting the plurality of protrusions to each other. At least one of the plurality of protrusions may be made of a material that responds to a magnetic force (e.g., a magnetic body (an object that forms an attractive force in response to the magnetic force) or a magnet).

According to one embodiment, the rolling shaft 115 (or the rolling gear assembly or the rolling shaft member) may have a length similar to that of one side of the panel support member 117 and may be disposed at an edge at one side of the support structure 114. For example, the rolling shaft 115 may be formed in a cylindrical rod shape. Centers of both side surfaces of the rolling shaft 115 may be formed to protrude more than the surroundings. The protruding centers of the both side surfaces of the rolling shaft 115 may be mounted on one side of the support structure 114. Accordingly, while the second housing 182 moves in the first direction (e.g., the X axis direction), the rolling shaft 115 may rotate. At least a portion of the rolling shaft 115 may be gear-coupled with the panel support member 117. Alternatively, the rolling shaft 115 may be in contact with at least a portion of the panel support member 117. While the rolling shaft 115 rotates, an arrangement of the panel support member 117 may be changed.

According to one embodiment, the actuator 112 may generate power by receiving electric power from the battery included in the electronic device 101. A pinion gear may be disposed at one side of the actuator 112, and the pinion gear may operate as a gear on a rack formed at one side of the panel support member 117. Based on the operation of the actuator 112, the second housing 182 and the display 160 may move in the first direction (e.g., the X axis direction) or the second direction (e.g., the -X axis direction). The actuator 112 may be disposed in an elongated manner in a longitudinal direction (e.g., the Y axis direction or the -Y axis direction) of the support structure 114, and may include at least one actuator 112.

According to one embodiment, at least one piece of hardware related to driving of the electronic device 101 (e.g., the printed circuit board 119, the processor, and the battery) may be disposed inside the support structure 114. For example, the printed circuit board 119 may be disposed between the support structure 114 and the first housing 181. Electronic elements (e.g., the processor, a communication circuit, the memory, and the sensor module) for driving the electronic device 101 may be disposed on the printed circuit board 119.

According to one embodiment, the sliding support member 111 may be fastened to one side of the support structure 114. The sliding support member 111 may be fastened with the second housing 182 such that the second housing 182 and the display 160 are movable.

According to one embodiment, the elastic module 210 may assist the movement of the second housing 182. For example, the elastic module 210 may include a first spring and a second spring coupled complementary to each other. A portion of the elastic module 210 may be coupled to the support structure 114. Another portion of the elastic module 210 may be coupled to the second housing 182. Accordingly, when the second housing 182 moves in the first direction (e.g., the X axis direction), the elastic module 210 may apply the elastic force in the second direction (e.g., the -X axis direction) up to a specified point. When the second housing 182 passes the specified point while moving in the first direction (e.g., the X axis direction), the elastic module 210 may apply the elastic force in the first direction (e.g., the X axis direction).

According to one embodiment, the first housing 181 may include a cover base 181a including a bottom surface on which at least a portion of the support structure 114 is seated and side walls disposed to surround edges (e.g., side portions respectively disposed at distal ends in the X axis direction and the -X axis direction) of the support structure 114, and a guard member 110 for fixing the edges (e.g., the side portions respectively disposed at the distal ends in the X axis direction and the -X axis direction) of the support structure 114. A fastening portion may be disposed on a side in the third direction (e.g., the Y axis direction) or the fourth direction (e.g., the -Y axis direction) of the first housing 181 and the guard member 110 may be fastened to the fastening portion, so that at least a portion in the third direction (e.g., the Y axis direction) or the fourth direction (e.g., the -Y axis direction) of the first housing 181 may be closed. A side in the first direction (e.g., the X axis direction) of the first housing 181 may have an open state, and the second housing 182 may be fastened via the first direction (e.g., the X axis direction).

According to one embodiment, the second housing 182 may be fastened with the first housing 181 in the first direction (e.g., the X axis direction). The second housing 182 may include side walls surrounding some side surfaces of the support structure 114 (e.g., side walls disposed in the X axis direction, the Y axis direction, and the -Y axis direction). The second housing 182 may move in the first direction (e.g., the X axis direction) or the second direction (e.g., the -X axis direction) from a state of being seated on the support structure 114. In this regard, an arrangement shape and a position of the second housing 182 may be changed based on the operation of the actuator. Alternatively, the arrangement shape and the position of the second housing 182 may be changed by an external force from the user.

Although the structure in which the various components of the electronic device 101 are arranged has been described in the above description, the disclosure is not limited thereto. For example, the electronic device 101 according to an embodiment of the disclosure may include the display, the first housing for surrounding one side of the display, the panel support member disposed on one side of the display, the rolling shaft in contact with the panel support member, and the second housing fastened to the first housing, and other components may be added or excluded as needed.

The above-described electronic device 101 may include the actuator, and may operate to automatically expand or reduce the second display area 160b based on control of the actuator. Alternatively, in the electronic device 101, as the second housing 182 moves in the first direction (e.g., the X axis direction) by an external pressure applied to the second housing 182, the panel support member 117 and the rolling shaft 115 engaged with the second housing 182 rotate, so that the second display area 160b may be expanded or reduced in a manual manner. Alternatively, the rolling shaft 115 may be disposed in the second housing 182 and the display 160 may be fixed to the first housing 181, so that, in the electronic device 101, a partial area of the display 160 accommodated in the second housing 182 may be expanded or reduced based on the movement of the second housing 182.

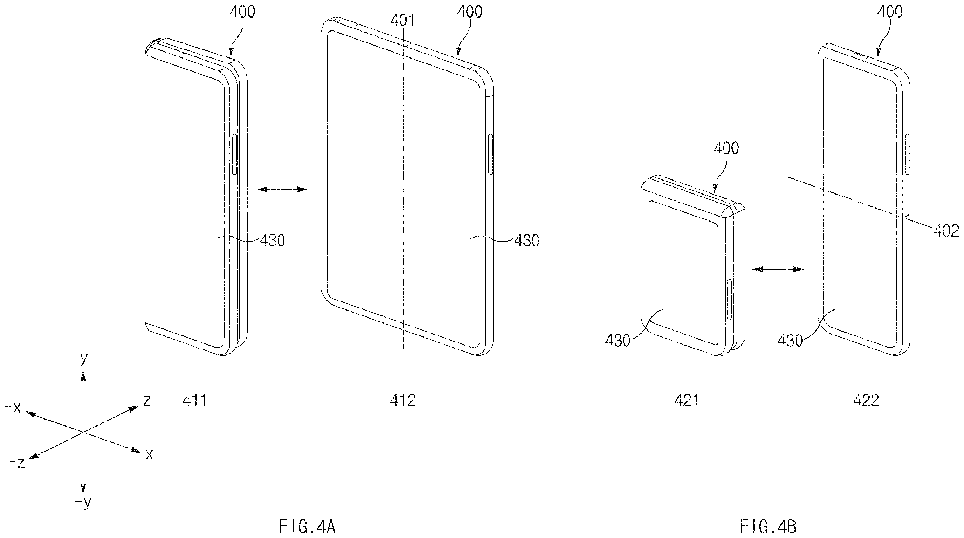

FIG. 4 illustrates a form factor of an electronic device according to various embodiments as an example.

Referring to FIG. 4, an electronic device 400 (e.g., the electronic device 101 in FIGS. 1 to 3) may be modified to have various shapes.

Referring to (a) in FIG. 4, the electronic device 400 according to one embodiment may be folded or unfolded based on a first axis 401 (e.g., a y axis). For example, an amount of content displayed on a display 430 in a state 411 in which the electronic device 400 is folded may be relatively smaller than an amount of content displayed on the display 430 in a state 412 in which the electronic device 400 is unfolded.

Referring to (b) in FIG. 4, the electronic device 400 according to one embodiment may be folded or unfolded based on a second axis 402 (e.g., an X axis). For example, an amount of content displayed on the display 430 in a state 421 in which the electronic device 400 is folded may be relatively smaller than an amount of content displayed on the display 430 in a state 422 in which the electronic device 400 is unfolded.

According to one embodiment, when a form factor of the display 430 is changed (e.g., folded or unfolded) while a user of the electronic device 400 is gazing at the content displayed on the display 430, the electronic device 400 may apply a visual effect to at least a portion of the content displayed on the display 430 before the form factor is changed or add a user interface (UI) (or an indicator) and display the user interface on the display 430.

Embodiments described with reference to drawings below may be equally or similarly applied to the various form factors of the electronic device described with reference to FIGS. 2 to 4. In addition, because the form factors of the electronic device shown in FIGS. 2 to 4 are examples for convenience of description, the form factor of the electronic device according to one embodiment is not construed as being limited to the form shown in FIGS. 2 to 4. Embodiments to be described below may be equally or similarly applied to various form factors in which the size of the display of the electronic device changes other than those shown in FIGS. 2 to 4.

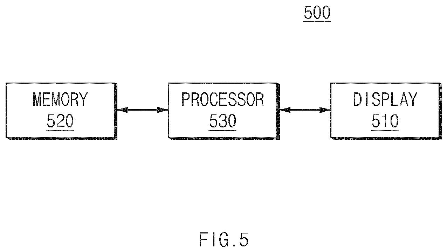

FIG. 5 is a block diagram of an electronic device according to various embodiments.

Referring to FIG. 5, an electronic device 500 (e.g., the electronic device 101 in FIGS. 1 to 3 or the electronic device 400 in FIG. 4) may include a display 510 (e.g., the display module 160 in FIGS. 1 to 3 or the display 430 in FIG. 4) having a display area that may be expanded or reduced, a memory 520 (e.g., the memory 130 in FIG. 1), and a processor 530 (e.g., the processor 120 in FIG. 1).

According to one embodiment, the display 510 may at least partially include a flexible area. According to one embodiment, the display 510 may be constructed to expand and reduce the display area. For example, at least a partial area of the display 510 may be located inside the electronic device 500 (e.g., rolled and disposed within the electronic device), and the display 510 may be slid out or slid in by a user to expand or reduce the display area. For example, the display 510 may include at least one of a flexible display, a slidable display, a foldable display, and a rollable display.

According to one embodiment, the display 510 may be reduced such that at least a partial area thereof is not visually exposed to the outside. For example, the state in which at least the partial area of the display 510 is reduced may be a first state. For example, the state in which at least the partial area of the display 510 is reduced may be a folded state or a rolled state.

According to one embodiment, the display 510 may be expanded to visually expose at least the partial area thereof to the outside. For example, the state in which the display 510 is expanded may be a second state. For example, the state in which the display 510 is expanded may be an unfolded (or unrolled) state.

According to one embodiment, the memory 520 may store at least one program, an application, data, or instructions executed by the processor 530. According to one embodiment, the memory 520 may include at least a portion of the memory 130 shown in FIG. 1. According to one embodiment, the memory 520 may include information or instructions for performing at least some of operations of the electronic device 500 to be described later. According to one embodiment, the memory 520 may include instructions related to a plurality of applications executed by the processor 530.

According to one embodiment, the processor 530 may display a user interface on the display 510 or scroll an execution screen (e.g., an execution screen of the application) displayed on the display 510 based on a change in a form factor of the electronic device 500. According to one embodiment, the processor 530 may display the user interface on the display 510 or scroll the execution screen displayed on the display 510 based on a size change of the display 510.

According to one embodiment, the processor 530 may sense that the size of the display 510 is changed, and display, on the display 510, a user interface (e.g., a dividing line and a blinking object) indicating at least a portion of content displayed on the display 510 before the size of the display 510 is changed. For example, the content displayed on the display 510 may include at least one of a text, an image, or a drawing input by the user.

According to one embodiment, based on the expansion of the display 510 of the electronic device 500, the processor 530 may display a user interface for distinguishing content displayed on the display 510 before the expansion and content newly displayed on the display 510 after the expansion from each other.

According to one embodiment, based on the reduction or the expansion of the display 510 of the electronic device 500, the processor 530 may display, on the display 510, a user interface indicating content that the user was gazing at among the contents displayed on the display 510 before the display 510 is reduced or expanded.

According to one embodiment, when the display 510 of the electronic device 500 is reduced or expanded, some of the contents displayed on the display 510 before the display 510 is reduced or expanded may be hidden from the display area or moved to an upper end of the display area. According to one embodiment, the processor 530 may automatically scroll up or down the execution screen of the display 430 (or without an input of the user) and move some of the contents displayed on the display 430 before the reduction or the expansion to a lower end of the display 510.

According to one embodiment, based on the reduction or the expansion of the display 510 of the electronic device 500, the processor 530 may display, on the display 510, a user interface indicating the last content among contents being input by the user via the display 510. According to one embodiment, after the display 510 is reduced or expanded, the processor 530 may receive a user input within a specified distance from a point where the user interface is displayed on the display 510. Based on the received user input, the processor 530 may recognize that content newly input by the user and content that the user has been inputting are related to each other. For example, the processor 530 may display the content being input by the user before the display 510 is reduced or expanded and the content newly input by the user after the display 510 is reduced or expanded on the display 510 in a connected manner. Hereinafter, operations described as being performed by the electronic device 500 may be referred to as being performed by the processor 530.

According to one embodiment, the electronic device 500 may display, on the display 510, a user interface indicating a portion of content displayed on the display 510 before the form factor is changed based on the change in the form factor (or the change in the size of the display 510). When the form factor of the electronic device 500 changes while gazing at the display 510, the user of the electronic device 500 may easily recognize content that the user is gazing at based on the displayed user interface.

According to one embodiment, the electronic device 500 may display, on the display 510, a user interface indicating the last content among contents input by the user to the display 510 before the form factor is changed based on the change in the form factor (or the size of the display 510). According to one embodiment, when the user provides a user input to the user interface displayed on the display 510 after the form factor of the electronic device 500 is changed, the electronic device 500 may recognize that content to be newly received from the user is related to content previously input by the user on the display 510. According to one embodiment, the electronic device 500 may provide the user with a continuous use experience when the form factor is changed. For example, the electronic device 500 may prevent interruptions to the user's use experience, which may occur when the form factor is changed.

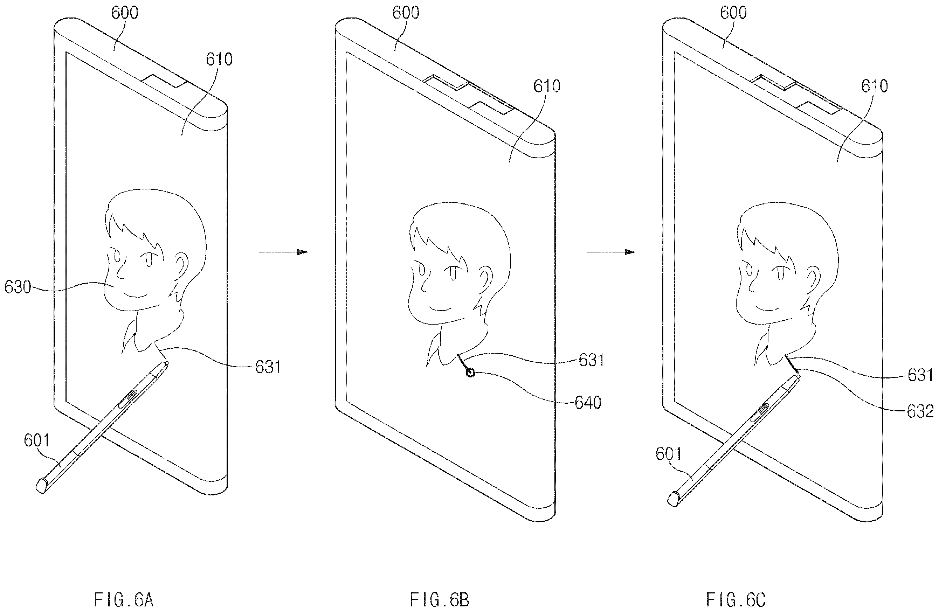

FIG. 6 is a diagram illustrating an operation of an electronic device according to various embodiments.

Referring to (a) to (c) in FIG. 6, an electronic device 600 (e.g., the electronic device 101 in FIGS. 1 to 3, the electronic device 400 in FIG. 4, or the electronic device 500 in FIG. 5) may include a display 610 (e.g., the display module 160 in FIGS. 1 to 3, the display 430 in FIG. 4, or the display 510 in FIG. 5).

(a) in FIG. 6 shows a state in which the display 610 of the electronic device 600 is reduced. The electronic device 600 according to one embodiment may receive a first handwriting input from a user using an external input device 601 (e.g., a digital pen or a stylus pen) in the state in which the display 610 is reduced, and recognize the first handwriting input. In various embodiments, the electronic device 600 may receive the first handwriting input from the user via a finger touch of the user. For example, the electronic device 600 may receive the first handwriting input from the user via a first touch input. According to one embodiment, the electronic device 600 may display a drawing 630 including at least one first stroke corresponding to the recognized first handwriting input on the display 610. According to one embodiment, the electronic device 600 may recognize the first handwriting input input by the user using the external input device 601 in units of strokes and display the result on the display 610. For example, the at least one first stroke corresponding to the first handwriting input input by the user may constitute the drawing 630. For example, the electronic device 600 may display the drawing 630 composed of the at least one recognized stroke on the display 610. According to one embodiment, the electronic device 600 may recognize one stroke based on sensing an operation of the external input device 601 of being detached (or released) after coming into contact with the display 610. In various embodiments, the electronic device 600 may recognize the one stroke by dividing the drawing 630 corresponding to the first handwriting input input by the user using the external input device 601 into predetermined pixel units.

Referring to (a) in FIG. 6, the electronic device 600 may recognize the last stroke 631 among the at least one first stroke corresponding to the first handwriting input received from the user in the state in which the display 610 is reduced and then receive a specified input that causes the display 610 to expand.

(b) and (c) in FIG. 6 show a state in which the display 610 of the electronic device 600 is expanded. Referring to (b) in FIG. 6, after the display 610 is expanded, the electronic device 600 according to one embodiment may display, on the display 610, a user interface 640 indicating the last stroke 631 recognized in the state before the display is expanded (e.g., the reduced state). In various embodiments, the electronic device 600 may apply a visual effect to the last stroke 631. For example, the electronic device 600 may change a color of the last stroke 631 such that the last stroke 631 has a different color from previous strokes. For example, the electronic device 600 may apply a blinking effect to the last stroke 631 such that the last stroke 631 blinks on the display 610.

Referring to (c) in FIG. 6, after the display 610 is expanded, the electronic device 600 may recognize a second handwriting input received within a specified distance from the last stroke 631. In various embodiments, the electronic device 600 may recognize the second handwriting input received within a specified distance from a point where the user interface 640 is displayed, in the state in which the display 610 is expanded. For example, the electronic device 600 may receive the second handwriting input from the user via a second touch input.

Referring to (c) in FIG. 6, the electronic device 600 may recognize a second stroke 632 corresponding to the second handwriting input received from the user in the state in which the display 610 is expanded. According to one embodiment, the electronic device 600 may recognize that the second stroke 632 corresponding to the second handwriting input received within a specified distance from a point of the display 610 where the last stroke 631 (or the user interface 640) is displayed is related to the last stroke 631 recognized last in the state in which the display 610 is reduced. According to one embodiment, the electronic device 600 may recognize that the second stroke 632 corresponding to the second handwriting input received within the specified distance from the point of the display 610 where the last stroke 631 (or the user interface 640) is displayed is continuous with the last stroke 631 recognized last in the state in which the display 610 is reduced.

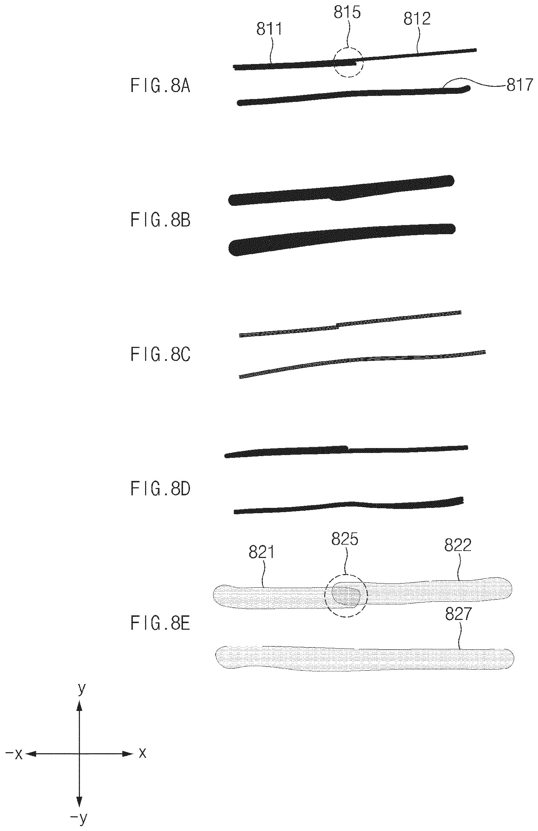

The electronic device 600 according to one embodiment may connect the second stroke 632 to the last stroke 631 and display the connected stroke on the display 610. For example, the electronic device 600 may move the second stroke 632 such that a start point of the second stroke 632 is located at an end point of the last stroke 631 (or a point where the first handwriting input corresponding to the last stroke 631 is released from the display 610). For example, the electronic device 600 may move the second stroke 632 such that at least a portion of the second stroke 632 (e.g., the start point of the second stroke 632) is displayed at the point where the display of the last stroke 631 on the display 610 ends. For example, the electronic device 600 may generate a third stroke (not shown), so that the third stroke is positioned between the last stroke 631 and the second stroke 632. For example, the third stroke positioned between the last stroke 631 and the second stroke 632 may connect the last stroke 631 and the second stroke 632 to each other. The electronic device 600 according to one embodiment may set a property of the second stroke 632 to be the same as a property of the last stroke 631. The electronic device 600 according to one embodiment may recognize the last stroke 631 and the second stroke 632 as one stroke. For example, the electronic device 600 may display the last stroke 631 and the second stroke 632 on the display 610 so as to be visually recognized as the one stroke. An example in which the electronic device 600 according to one embodiment displays the last stroke 631 and the second stroke 632 on the display 610 so as to be recognized as the one stroke will be described with reference to FIG. 8 to be described later.

(a) to (c) in FIG. 6 illustrate cases in which the electronic device 600 expands the reduced display 610 as an example. The above description may be equally or similarly applied even when the electronic device 600 reduces the expanded display 610.

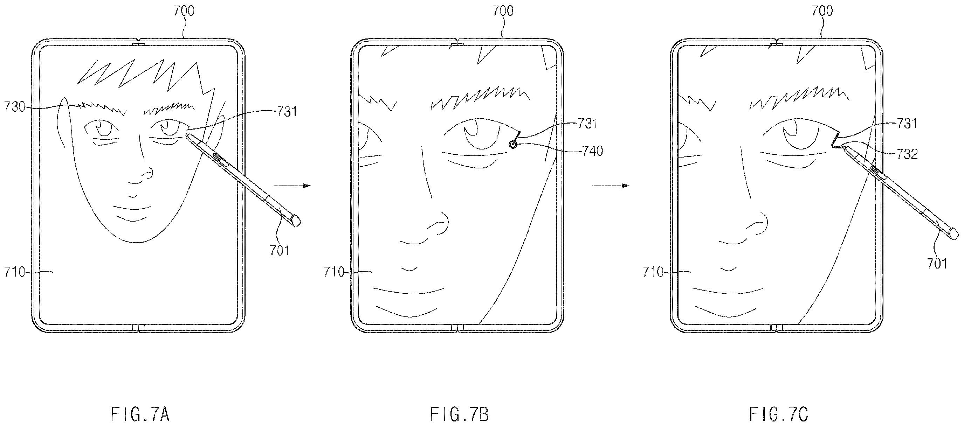

FIG. 7 is a diagram illustrating an operation of an electronic device according to various embodiments.

Referring to (a) to (c) in FIG. 7, an electronic device 700 (e.g., the electronic device 101 in FIGS. 1 to 3, the electronic device 400 in FIG. 4, the electronic device 500 in FIG. 5, or the electronic device 600 in FIG. 6) may include a display 710 (e.g., the display module 160 in FIGS. 1 to 3, the display 430 in FIG. 4, the display 510 in FIG. 5, or the display 610 in FIG. 6). (a) to (c) in FIG. 7 show one of states in which the display 710 of the electronic device 700 is reduced or enlarged.

Referring to (a) in FIG. 7, the electronic device 700 according to one embodiment may receive a first handwriting input from a user using an external input device 701 (e.g., the digital pen or the stylus pen) via the display 710 and recognize the received first handwriting input. In various embodiments, the electronic device 700 may receive the first handwriting input from the user via a finger touch of the user. For example, the electronic device 700 may receive the first handwriting input from the user via a first touch input. According to one embodiment, the electronic device 700 may display a drawing 730 including at least one first stroke corresponding to the recognized first handwriting input on the display 710. According to one embodiment, the electronic device 700 may recognize the first handwriting input input by the user using the external input device 701 in units of strokes and display the result on the display 710. For example, the at least one first stroke corresponding to the first handwriting input input by the user may constitute the drawing 730. For example, the electronic device 700 may display the drawing 730 composed of the at least one recognized stroke on the display 710. The description of the stroke according to one embodiment has been described above with reference to FIG. 6, so that a duplicate description will be omitted.

Referring to (a) in FIG. 7, the electronic device 700 may recognize the last stroke 731 among the at least one first stroke corresponding to the first handwriting input received from the user, and then receive a specified input (e.g., a user's pinch zoom input or a user's input using a physical key) that causes an execution screen of an application displayed on the display 710 to be enlarged (e.g., zoomed in).

(b) and (c) in FIG. 7 illustrate a case in which the electronic device 700 enlarges the execution screen of the application displayed on the display 710 based on the specified input. According to one embodiment, the electronic device 700 may enlarge (e.g., zoom in) the execution screen of the application displayed on the display 710 based on the specified input. The embodiment described with reference to FIG. 7 may be equally or similarly applied even when the electronic device 700 reduces (e.g., zooms out) content displayed on the display 710 based on the specified input.

(b) and (c) in FIG. 7 show a state in which content (e.g., the drawing 730) contained in the execution screen is enlarged when the execution screen of the application is enlarged based on the specified input. According to one embodiment, the electronic device 700 may enlarge, based on the specified input, the drawing 730 displayed on the display 710 based on the first handwriting input received from the user.

Referring to (b) in FIG. 7, the electronic device 700 according to one embodiment may display a user interface 740 displaying the last stroke 731 recognized before the drawing 730 is enlarged after enlarging the drawing 730. In various embodiments, the electronic device 700 may apply a visual effect to the last stroke 731. For example, the electronic device 700 may change a color of the last stroke 731 such that the last stroke 731 has a different color from previous strokes. For example, the electronic device 700 may apply a blinking effect to the last stroke 731 such that the last stroke 731 blinks on the display 710.

Referring to (c) in FIG. 7, the electronic device 700 may recognize a second handwriting input received within a specified distance from the last stroke 731. According to one embodiment, the electronic device 700 may recognize the second handwriting input received within a specified distance from a point where the user interface 740 is displayed, in the state in which the drawing 730 is enlarged. For example, the electronic device 700 may receive the second handwriting input from the user via a second touch input.

Referring to (c) in FIG. 7, the electronic device 700 may recognize a second stroke 732 corresponding to the second handwriting input received from the user in the state in which the drawing 730 is enlarged. According to one embodiment, the electronic device 700 may recognize that the second stroke 732 corresponding to the second handwriting input received within a specified distance from a point of the display 710 where the last stroke 731 (or the user interface 740) is displayed is related to the last stroke 731 recognized last before the drawing 730 is enlarged. According to one embodiment, the electronic device 700 may recognize that the second stroke 732 corresponding to the second handwriting input received within the specified distance from the point of the display 710 where the last stroke 731 (or the user interface 740) is displayed is continuous with the last stroke 731 recognized last before the drawing 730 is enlarged.

The electronic device 700 according to one embodiment may connect the second stroke 732 to the last stroke 731 and display the connected stroke on the display 710. For example, the electronic device 700 may move the second stroke 732 such that a start point of the second stroke 732 is located at an end point of the last stroke 731 (or a point where the first handwriting input corresponding to the last stroke 731 is released from the display 710). For example, the electronic device 700 may move the second stroke 732 such that at least a portion of the second stroke 732 (e.g., the start point of the second stroke 732) is displayed at the point where the display of the last stroke 731 on the display 710 ends. For example, the electronic device 700 may generate a third stroke (not shown) such that the third stroke is positioned between the last stroke 731 and the second stroke 732. For example, the third stroke located between the last stroke 731 and the second stroke 732 may connect the last stroke 731 and the second stroke 732 to each other. The electronic device 700 according to one embodiment may set a property of the second stroke 732 to be the same as a property of the last stroke 731. The electronic device 700 according to one embodiment may recognize the last stroke 731 and the second stroke 732 as one stroke. For example, the electronic device 700 may display the last stroke 731 and the second stroke 732 on the display 710 so as to be visually recognized as the one stroke. An example in which the electronic device 700 according to one embodiment displays the last stroke 731 and the second stroke 732 on the display 610 so as to be recognized as the one stroke will be described with reference to FIG. 8 to be described later.

FIG. 8 illustrates an example in which an electronic device recognizes two or more strokes as related to each other, according to various embodiments.

(a) to (e) in FIG. 8 show strokes displayed on a display (e.g., the display module 160 in FIGS. 1 to 3, the display 430 in FIG. 4, the display 510 in FIG. 5, the display 610 in FIG. 6, or the display 710 in FIG. 7) by an electronic device (e.g., the electronic device 101 in FIGS. 1 to 3, the electronic device 400 in FIG. 4, the electronic device 500 in FIG. 5, the electronic device 600 in FIG. 6, or the electronic device 700 in FIG. 7) corresponding to handwriting inputs received from a user.

According to one embodiment, (a) to (e) in FIG. 8 illustrate the strokes displayed by the electronic devices based on different types of pens. For example, (a) in FIG. 8 shows a fountain pen-type stroke. For example, (b) in FIG. 8 shows a general pen-type stroke. For example, (c) in FIG. 8 shows a pencil-type stroke. For example, (d) in FIG. 8 shows a brush-type stroke. For example, (e) in FIG. 8 shows a pen having an opaque property (e.g., a highlighter)-type stroke. The strokes shown in (a) to (e) in FIG. 8 are shown to show differences between the types of pens as an example. Hereinafter, various embodiments will be described based on the strokes in (a) in FIG. 8 and the strokes in (e) in FIG. 8.

The electronic device according to one embodiment may recognize that a first stroke 811 or 821 (e.g., the last stroke 631 in FIG. 6 or the last stroke 631 in FIG. 7) is related to a second stroke 812 and 822 (e.g., the second stroke 632 in FIG. 6 or the second stroke 732 in FIG. 7) based on at least one of the change in the form factor of the electronic device, the change in the size of the display, and/or the enlargement or the reduction of the execution screen displayed on the display. For example, the electronic device may connect the first stroke 811 or 821 and the second stroke 8112 or 822 to each other and recognize the first and second strokes as one stroke, based on at least one of the change in the form factor of the electronic device, the change in the size of the display, and/or the enlargement or the reduction of the execution screen displayed on the display. For example, the electronic device may display the first stroke and the second stroke on the display so as to be visually recognized as the one stroke.

Referring to (a) in FIG. 8, the electronic device according to one embodiment may recognize the first stroke 811 and the second stroke 812 as related to each other. The electronic device according to one embodiment may set a property of the first stroke 811 to be the same as a property of the second stroke 812. For example, the property of the stroke may include at least one of the type of the pen, a thickness value of the pen, and/or a color of the pen. For example, when a type of the first stroke 811 is the above-mentioned fountain-pen type, the electronic device may display the second stroke on the display by setting a type of the second stroke to the fountain pen-type. For example, when a thickness value of the first stroke 811 is 10 points, the electronic device may display the second stroke on the display by setting a thickness value of the second stroke 812 to 10 points so as to be equal to the thickness value of the first stroke 811. For example, when a color of the first stroke 811 is blue, the electronic device may display the second stroke on the display by also setting a color of the second stroke 812 to the blue.

According to a comparative example, the electronic device may recognize that the first stroke 811 and the second stroke 812 are not related to each other. In this case, the electronic device according to the comparative example may display a point 815 between the first stroke 811 and the second stroke 812 on the display so as not to be visually smooth, so that the first stroke 811 and the second stroke 812 may be displayed on the display to be distinguished from each other.

The electronic device according to one embodiment may recognize that the first stroke 811 and the second stroke 812 as related to each other. In this case, the electronic device according to one embodiment may connect the first stroke 811 and the second stroke 812 to each other so as to be visually smooth. For example, the electronic device may connect the first stroke 811 and the second stroke 812 to each other to obtain one smooth stroke 817 and display the stroke 817 on the display. According to one embodiment, a point where the handwriting input of the user is not recognized may exist between the first stroke 811 and the second stroke 812. For example, the electronic device may recognize first coordinate information (e.g., an X axis coordinate value and a Y axis coordinate value) indicating an end point of the first stroke 811 (or a point where a first handwriting input corresponding to the first stroke 811 is detached (or released) from the display. The electronic device may recognize second coordinate information indicating a start point where the second stroke 812 is input to the display (or a point where a second handwriting input corresponding to the second stroke 812 starts to be input to the display). The electronic device according to one embodiment may compare the recognized first coordinate information and second coordinate information to each other. When the first coordinate information and the second coordinate information are not the same as each other, the electronic device according to one embodiment may display the second stroke 812 on the display by moving the second stroke 812 such that the first coordinate information and the second coordinate information are the same as each other. When the first coordinate information and the second coordinate information are not the same as each other, the electronic device according to one embodiment may generate a third stroke (not shown) for connecting a first point where the first stroke 811 is detached (or released) from the display and a second point where the second stroke 812 starts to be input to the display to each other. The electronic device according to one embodiment may generate the third stroke (not shown) for connecting the first stroke 811 and the second stroke 812 to each other, and add the third stroke between the first stroke 811 and the second stroke 812. The electronic device according to one embodiment may connect the first stroke 811, the second stroke 812, and the added third stroke to each other in a visually smooth manner so as to be recognized as one stroke.

Referring to (e) in FIG. 8, when the stroke type is the pen having the opaque property (e.g., the highlighter)-type described above, the electronic device according to the comparative example may change an opacity of a point where the strokes overlap each other, and recognize that the first stroke 821 and the second stroke 822 are not related to each other. For example, the electronic device according to the comparison example may change an opacity of a point 825 where the first stroke 821 and the second stroke 822 at least partially overlap each other, and display, on the display, the first stroke 821 and the second stroke 822 so as to be visually recognized as separate strokes rather than one stroke.

The electronic device according to one embodiment may recognize that the first stroke 821 and the second stroke 822 are related to each other. For example, the electronic device may smoothly connect the first stroke 821 and the second stroke 822 to each other so as to be recognized as one stroke 827. For example, the electronic device may connect the first stroke 821 and the second stroke 822 to each other to obtain the one smooth stroke 827 and display the one smooth stroke 827 on the display. According to one embodiment, the electronic device may set an opacity of the second stroke 822 to be the same as that of the first stroke 821, and may maintain the opacity (e.g., the opacity of the first stroke 822 or the second stroke) of the point 825 where the first stroke 821 and the second stroke 822 at least partially overlap each other without changing.

According to one embodiment, in the case of the change in the form factor, the change in the size of the display, and/or the enlargement or the reduction of the execution screen displayed on the display, the electronic device may recognize the first stroke and the second stroke respectively input before and after the change as one stroke, and display the recognized one stroke on the display to provide the user with the continuous use experience.

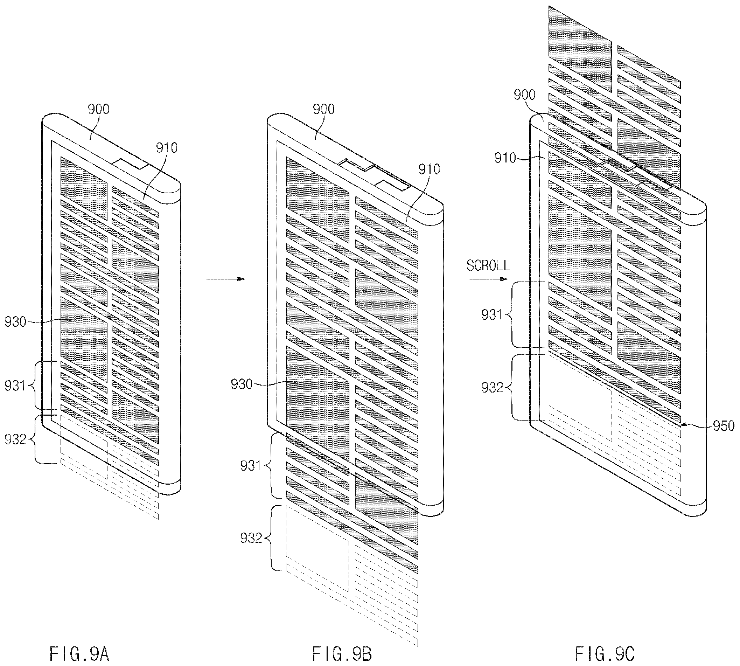

FIG. 9 is a diagram illustrating an operation of an electronic device according to various embodiments.

Referring to (a) to (c) in FIG. 9, an electronic device 900 (e.g., the electronic device 101 in FIGS. 1 to 3, the electronic device 400 in FIG. 4, the electronic device 500 in FIG. 5, the electronic device 600 in FIG. 6, or the electronic device 700 in FIG. 7) may include a display 910 (e.g., the display module 160 in FIGS. 1 to 3, the display 430 in FIG. 4, the display 510 in FIG. 5, the display 610 in FIG. 6, or the display 710 in FIG. 7).
(a) in FIG. 9 shows a state in which the display 910 of the electronic device 900 is reduced. The electronic device 900 according to one embodiment may display an execution screen of an application on the display 910 in the state in which the display 910 is reduced. For example, the execution screen of the application may contain plurality of text data 930. For example, the plurality of text data 930 may include first text data 931 and second text data 932. According to one embodiment, the first text data 931 may be text data displayed at the lowermost end among the plurality of text data 930 displayed on the display 910 in the state in which the display 910 is reduced. For example, the first text data 931 may be text data that a user visually recognizes last on the display in the reduced state. For example, the first text data 931 may be text data displayed at a lower end of the reduced display 910. According to one embodiment, the second text data 932 may be text data not displayed on the display 910 in the state in which the display 910 is reduced. For example, the second text data 932 may be text data to be displayed on the display 910 next after the first text data 931 is displayed on the display 910. According to one embodiment, the electronic device 900 may receive a specified input (e.g., a user input) to expand the display 910.

(b) and (c) in FIG. 9 show a state in which the display 910 of the electronic device 900 is expanded. Referring to (b) in FIG. 9, when the display 910 is expanded, the electronic device 900 according to one embodiment may recognize that at least some of the plurality of text data 930 displayed on the reduced display 910 are not displayed on the display 910. For example, the electronic device 900 may recognize that the first text data 931 displayed on the reduced display 910 is not displayed on the expanded display 910. For example, the electronic device 900 may recognize that the first text data 931 displayed on the reduced display 910 is hidden so as not to be visually exposed on the expanded display 910. For example, the electronic device 900 may recognize that the first text data 931 is out of a display area of the display 910 and is not visually exposed based on the expansion of the display 910.

Referring to (c) in FIG. 9, the electronic device 900 may scroll the execution screen displayed on the display 910 such that the first text data 931 is displayed on the display 910 and visually exposed. According to one embodiment, the electronic device 900 may automatically scroll the execution screen of the application displayed on the display 910 such that the hidden first text data 931 is displayed on the display 910. Referring to (c) in FIG. 9, the electronic device 900 may further display the second text data 932 on the display 910. According to one embodiment, the electronic device 900 may generate a user interface (or an indicator) (e.g., a dividing line) 950 that distinguishes the first text data 931 that was displayed on the reduced display 910 and the newly displayed second text data 932 from each other. The electronic device 900 may display the generated user interface 950 on the display 910 so as to be located between the first text data 931 and the second text data 932.

According to one embodiment, the electronic device 900 may scroll the execution screen such that the first text data 931 displayed on the display 910 before a form factor (or a size of the display 910) of the electronic device 900 is changed is displayed on the display 910 after the form factor of the electronic device 900 is changed. Because the user may visually recognize the first text data 931 in a continuous (or consecutive) manner before and after the change in the form factor of the electronic device 900, the electronic device 900 according to one embodiment may provide the user with the continuous use experience.

According to one embodiment, the electronic device 900 may display, on the display 910, the user interface 950 that distinguishes data (e.g., the first text data 931) already displayed before the change in the form factor of the electronic device 900 (or the size of the display 910) and data (e.g., the second text data 932) newly appearing after the change in the form factor from each other. Via the displayed user interface 950, the user may identify up to which data (e.g., the first text data 931) the data have been visually recognized or identify from which data (e.g., the second text data 932) the data have to be visually recognized, thereby having the continuous use experience.

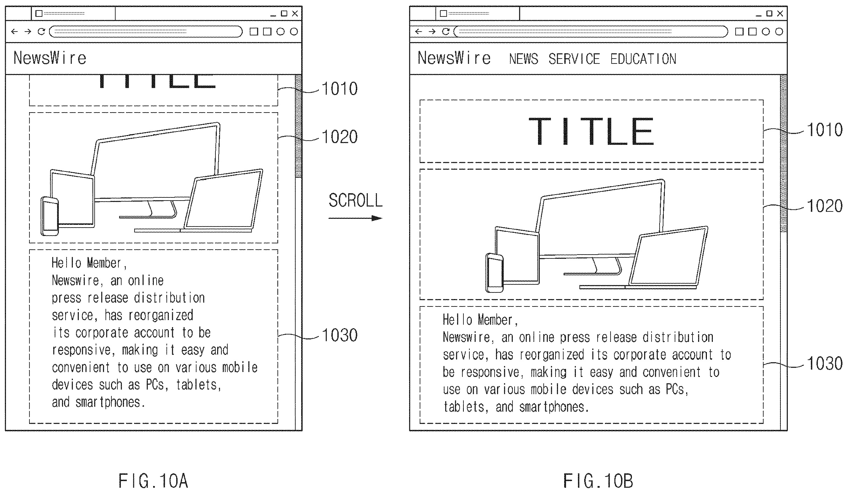

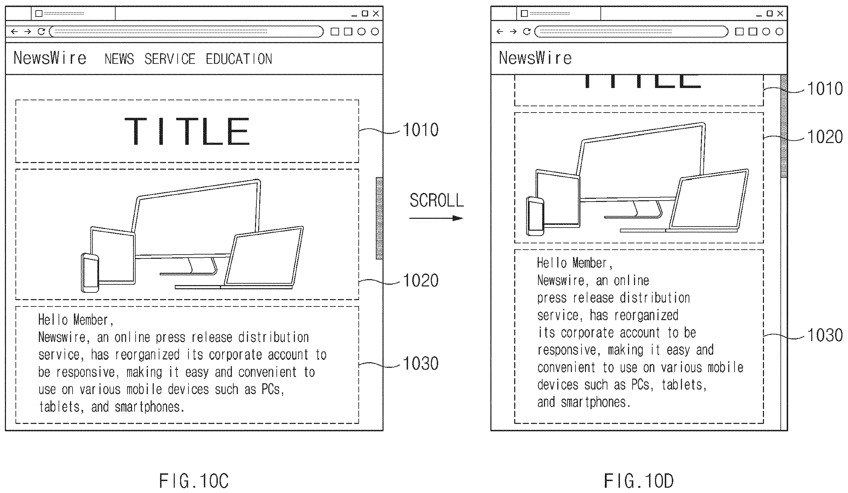

FIGS. 10A and 10B are diagrams illustrating an operation of the electronic device according to various embodiments.

Referring to FIGS. 10A and 10B, an electronic device (e.g., the electronic device 101 in FIGS. 1 to 3, the electronic device 400 in FIG. 4, the electronic device 500 in FIG. 5, the electronic device 600 in FIG. 6, the electronic device 700 in FIG. 7, or the electronic device 900 in FIG. 9) may display an execution screen of an application (e.g., a news application) on a display (e.g., the display module 160 in FIGS. 1 to 3, the display 430 in FIG. 4, the display 510 in FIG. 5, the display 610 in FIG. 6, the display 710 in FIG. 7, or the display 910 in FIG. 9).

FIG. 10A illustrates a case in which the electronic device according to one embodiment expands the reduced display, (a) in FIG. 10A shows the execution screen of the application displayed on the reduced display of the electronic device according to one embodiment. According to one embodiment, the reduced display may display a plurality of contents 1010, 1020, and 1030. For example, the reduced display may display the first content 1010, the second content 1020, and the third content 1030. According to one embodiment, the electronic device may receive a specified input (e.g., a user input) to expand the display.

(b) in FIG. 10A shows the execution screen of the application displayed on the expanded display of the electronic device according to one embodiment. According to one embodiment, the electronic device may expand the display based on the specified input. The expanded display may display a greater amount of content than content displayed on the display in the reduced state. The electronic device according to one embodiment may scroll the execution screen of the application such that some contents (e.g., the third content 1030) of the plurality of contents 1010, 1020, and 1030 displayed before the display is expanded are positioned at a lower end of a screen area of the display. According to one embodiment, the electronic device may scroll the execution screen of the application such that the third content 1030 among the plurality of contents 1010, 1020, and 1030 displayed on the display before a size of the display is changed is positioned last in the screen area after the size of the display is changed. For example, the third content 1030 may be content displayed at the lowermost end of a display area of the display among the plurality of contents 1010, 1020, and 1030 displayed before the size of the display is changed. For example, the third content 1030 may be content visually recognized last by a user who recognizes the display.

According to one embodiment, when the electronic device expands the display after the user visually recognizes all of the contents displayed on the reduced display, the electronic device may allow the content (e.g., the third content 1030) last recognized by the user among the contents that have been displayed to be located at the lowermost end of the display area of the expanded display. For example, the electronic device may allow the content (e.g., the third content 1030) last recognized by the user to be located at the lowermost end of the display area of the expanded display. Because the content (e.g., the third content 1030) last recognized before the size of the display is changed is located at the lower end of the display even when the size of the display is changed, the user of the electronic device according to one embodiment may identify up to which content (e.g., the third content 1030) the contents have been visually recognized. When the display changes from the reduced state to the expanded state, the electronic device according to one embodiment may provide the user with the continuous use experience.

FIG. 10B illustrates a case in which the electronic device according to one embodiment reduces the expanded display, (a) in FIG. 10B illustrates the execution screen of the application displayed on the expanded display of the electronic device according to one embodiment. According to one embodiment, the expanded display may display the plurality of contents 1010, 1020, and 1030. For example, the reduced display may display the first content 1010, the second content 1020, and the third content 1030. According to one embodiment, the electronic device may receive a specified input (e.g., a user input) to reduce the display.

(b) in FIG. 10B shows the execution screen of the application displayed on the reduced display of the electronic device according to one embodiment. According to one embodiment, the electronic device may reduce the display based on the specified input. The reduced display may display a smaller amount of content than the content displayed on the display in the expanded state before being reduced. The electronic device according to one embodiment may scroll the execution screen of the application such that some contents (e.g., the third content 1030) among the plurality of contents 1010, 1020, and 1030 displayed before the display is reduced are located at the lower end of the screen area of the display. For example, the third content 1030 may be the content displayed at the lowermost end of the display area of the display among the plurality of contents 1010, 1020, and 1030 displayed before the size of the display is changed. For example, the third content 1030 may be the content visually recognized last by the user who recognizes the display.

According to one embodiment, when the electronic device reduces the display after the user visually recognizes all of the contents displayed on the expanded display, the electronic device may allow the content (e.g., the third content 1030) last recognized by the user among the contents that have been displayed to be located at the lower end of the display area of the reduced display. For example, the electronic device may allow the content (e.g., the third content 1030) last recognized by the user to be located at the lowermost end of the display area of the reduced display. Because the content (e.g., the third content 1030) last recognized before the size of the display is changed is located at the lower end of the display even when the size of the display is changed, the user of the electronic device according to one embodiment may identify up to which content (e.g., the third content 1030) the contents have been visually recognized. When the display changes from the expanded state to the reduced state, the electronic device according to one embodiment may provide the user with the continuous use experience.

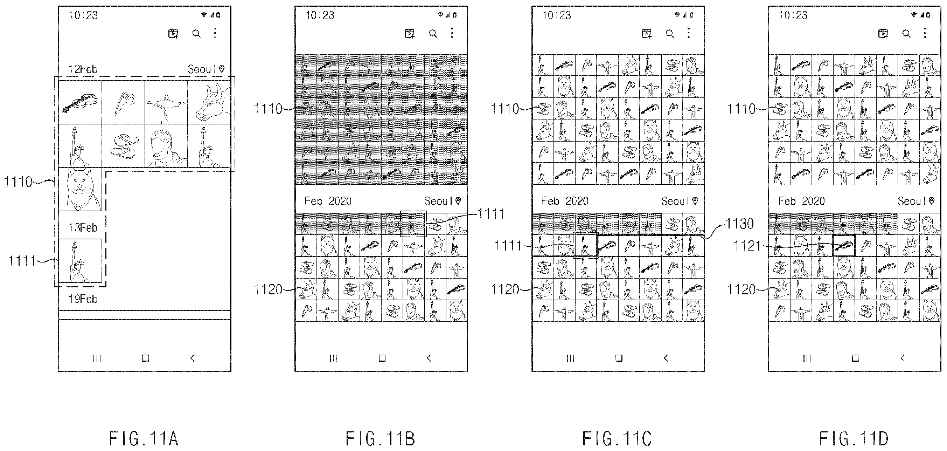

FIG. 11 is a diagram illustrating an operation of an electronic device according to various embodiments.

Referring to FIG. 11, an electronic device (e.g., the electronic device 101 in FIGS. 1 to 3, the electronic device 400 in FIG. 4, the electronic device 500 in FIG. 5, the electronic device 600 in FIG. 6, the electronic device 700 in FIG. 7, or the electronic device 900 in FIG. 9) may display an execution screen of an application (e.g., a gallery application) on a display (e.g., the display module 160 in FIGS. 1 to 3, the display 430 in FIG. 4, the display 510 in FIG. 5, the display 610 in FIG. 6, the display 710 in FIG. 7, or the display 910 in FIG. 9).
(a) in FIG. 11 shows an execution screen of the application composed of a first layout on the display of the electronic device according to one embodiment. For example, the electronic device may display a plurality of thumbnail images 1110 on the display in the first layout. For example, the plurality of thumbnail images 1110 may include a first thumbnail image 1111. For example, the first thumbnail image 1111 may be a thumbnail image positioned last among the plurality of thumbnail images displayed in the first layout. For example, the first thumbnail image 1111 may be a thumbnail image visually recognized last by a user who recognizes the display. According to one embodiment, the electronic device may receive a user input to change the execution screen of the application to a layout different from the first layout.

(b) in FIG. 11 shows an execution screen of the application composed of a second layout on the display of the electronic device according to one embodiment. For example, the electronic device may display the execution screen of the application that was displayed in the first layout on the display in the second layout based on a user input to change the layout. According to one embodiment, the electronic device may display the plurality of thumbnail images 1110 that was displayed in the first layout and a plurality of thumbnail images 1120 newly displayed in the second layout on the display. According to one embodiment, the electronic device may recognize the plurality of thumbnail images 1120 newly displayed in the second layout based on the first thumbnail image 1111. According to one embodiment, the electronic device may apply a visual effect for a specified time period (e.g., N seconds) to the plurality of thumbnail images 1110 that have been displayed. For example, the electronic device may dim the plurality of thumbnail images 1110 for the specified time period so as to be distinguished from the newly displayed plurality of thumbnail images 1120.

(c) in FIG. 11 shows the execution screen of the application composed of the second layout on the display of the electronic device according to one embodiment. For example, the electronic device may display the execution screen of the application that was displayed in the first layout on the display in the second layout based on the user input to change the layout. According to one embodiment, the electronic device may recognize the plurality of thumbnail images 1120 newly displayed in the second layout based on the first thumbnail image 1111. According to one embodiment, the electronic device may generate a user interface 1130 (e.g., a dividing line) that distinguishes the plurality of thumbnail images 1110 that was displayed in the first layout and the plurality of thumbnail images 1120 newly displayed in the second layout from each other. The electronic device according to one embodiment may display the generated user interface 1130 on the display so as to be positioned between the plurality of thumbnail images 1110 that was displayed in the first layout and the plurality of thumbnail images 1120 newly displayed in the second layout.

(d) in FIG. 11 shows the execution screen of the application composed of the second layout on the display of the electronic device according to one embodiment. For example, the electronic device may display the execution screen of the application that was displayed in the first layout on the display in the second layout based on the user input to change the layout. According to one embodiment, the electronic device may recognize a second thumbnail image 1121 displayed first among the plurality of thumbnail images 1120 newly displayed in the second layout based on the first thumbnail image 1111. According to one embodiment, the electronic device may apply a visual effect for the specified time period (e.g., N seconds, where N is a positive number) to the second thumbnail image 1121. For example, the electronic device may apply a blinking effect to make the second thumbnail image 1121 blink to the second thumbnail image 1121 for the specified time period, so that the user may easily recognize the newly displayed plurality of thumbnail images 1120.

According to one embodiment, when content (e.g., a thumbnail) displayed on the display is changed based on the change in the layout, the electronic device may display various visual effects or a user interface for distinguishing newly displayed content (e.g., the newly displayed plurality of thumbnail images 1120) and content (e.g., the plurality of thumbnail images 1110) that has been displayed from each other. Because the user of the electronic device according to one embodiment may identify up to which content (e.g., the plurality of thumbnail images 1110) the contents have been visually recognized or identify from which content (e.g., the newly displayed plurality of thumbnail images 1120) the contents have to be visually recognized using the various visual effects or the user interface, thereby having the continuous use experience.

An electronic device (e.g., the electronic device 101 in FIGS. 1 to 3, the electronic device 400 in FIG. 4, the electronic device 500 in FIG. 5, the electronic device 600 in FIG. 6, the electronic device 700 in FIG. 7, the electronic device 900 in FIG. 9, the electronic device described with reference to FIGS. 10A to 10B, or the electronic device described with reference to FIG. 11) may include a display (e.g., the display module 160 in FIGS. 1 to 3, the display 430 in FIG. 4, the display 510 in FIG. 5, the display 610 in FIG. 6, the display 710 in FIG. 7, or the display 910 in FIG. 9) capable of being expanded and reduced, a memory (e.g., the memory 130 in FIG. 1 or the memory 520 in FIG. 5), and a processor (e.g., the processor 120 in FIG. 1 or the processor 530 in FIG. 5) operatively connected to the display and the memory. According to one embodiment, the memory may include instructions that, when executed, cause the processor to recognize a first handwriting input received from a user via the display in a reduced state, display at least one first stroke corresponding to the received first handwriting input on the display in the reduced state, change the display to an expanded state based on a specified input, display a first user interface indicating a last stroke among the at least one first stroke in the expanded state of the display, recognize a second stroke corresponding to a second handwriting input as related to the last stroke among the at least one first stroke when the second handwriting input is received from the user within a specified distance from a point where the first user interface is displayed in the expanded state of the display, and display the second stroke so as to be connected to the last stroke on the expanded display.

According to one embodiment, the instructions may cause the processor to set a property of the second stroke to be the same as a property of the last stroke among the at least one first stroke.

According to one embodiment, the property may include at least one of a type of a pen, a thickness value of the pen, and a color of the pen.

According to one embodiment, the instructions may cause the processor to move the second stroke such that at least a portion of the second stroke is displayed at a point where input of the last stroke ends.

According to one embodiment, the instructions may cause the processor to recognize the second stroke and the last stroke as one stroke, and display the recognized one stroke on the expanded display.

According to one embodiment, the instructions may cause the processor to add a third stroke having the same property as the last stroke between the last stroke and the second stroke and display the third stroke on the expanded display.

According to one embodiment, the instructions may cause the processor to display first text data on the display in the reduced state, and display a second user interface that distinguishes second text data additionally displayed on the display in the expanded state from the first text data when the display is changed to the expanded state based on the specified input.

According to one embodiment, the instructions may cause the processor to display an execution screen containing at least one content on the display in the reduced state, and scroll the execution screen of the display such that, when at least some contents among the contents displayed on the display in the reduced state are not displayed in the expanded state of the display, the at least some contents are displayed on the display in the expanded state.

According to one embodiment, the instructions may cause the processor to scroll the execution screen such that the at least some contents are positioned at a lower end of a display area of the display in the expanded state.

According to one embodiment, the instructions may cause the processor to change a color of the last stroke or apply a visual effect including a blinking effect to the last stroke.

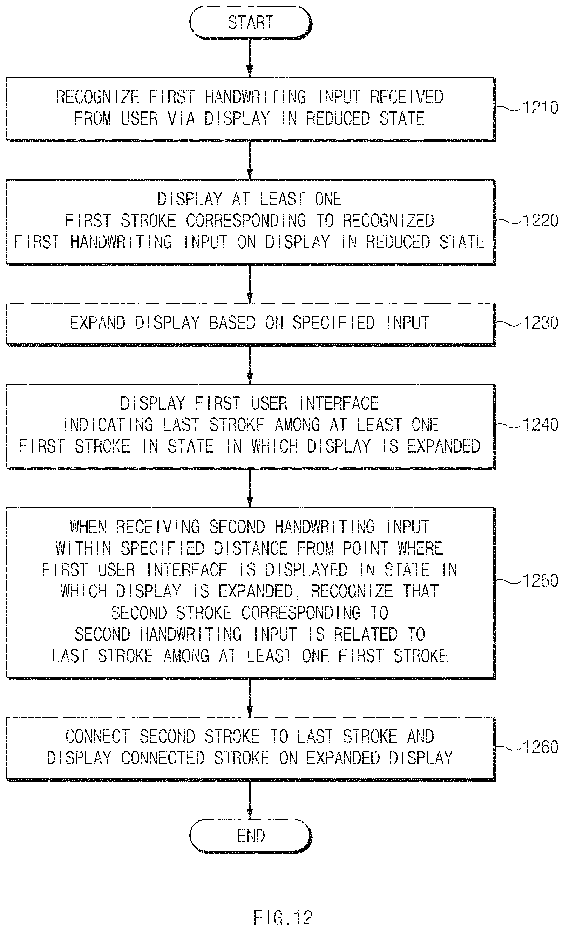

FIG. 12 is a flowchart of an operating method of an electronic device including a display in which a display area may be expanded and reduced, according to various embodiments.

According to one embodiment, in operation 1210, an electronic device (e.g., the electronic device 101 in FIGS. 1 to 3, the electronic device 400 in FIG. 4, the electronic device 500 in FIG. 5, the electronic device 600 in FIG. 6, the electronic device 700 in FIG. 7, or the electronic device 900 in FIG. 9) may recognize a first handwriting input received from a user via a display (e.g., the display module 160 in FIGS. 1 to 3, the display 430 in FIG. 4, the display 510 in FIG. 5, the display 610 in FIG. 6, the display 710 in FIG. 7, or the display 910 in FIG. 9) in a reduced state. For example, the electronic device may receive the first handwriting input for inputting a drawing or a text to the display by the user using at least one of an external input device (e.g., the external input device 601 in FIG. 6 or the external input device 701 in FIG. 7) or a finger touch, and recognize the received first handwriting input.

According to one embodiment, in operation 1220, the electronic device may display at least one first stroke corresponding to the recognized first handwriting input on the display in the reduced state. According to one embodiment, the electronic device may recognize the recognized first handwriting input in units of strokes. For example, the electronic device may display the at least one first stroke corresponding to the recognized first handwriting input on the display in the reduced state. According to one embodiment, the electronic device may display a drawing or a text composed of the at least one first stroke on the display. For example, the drawing or the text displayed on the display may contain the at least one first stroke recognized by the electronic device.

According to one embodiment, in operation 1230, the electronic device may expand the display based on a specified input (e.g., a user input). For example, the specified input may include a press input using a physical key or a button input. For example, the specified input may include a physical force provided by the user.

According to one embodiment, in operation 1240, the electronic device may display a first user interface indicating the last stroke among the at least one first stroke in the state in which the display is expanded. According to one embodiment, the electronic device may display the first user interface indicating the last stroke (e.g., the last stroke 631 in FIG. 6 or the last stroke 731 in FIG. 7) among the at least one first stroke displayed on the display in the reduced state.

According to one embodiment, in operation 1250, when receiving a second handwriting input within a specified distance from a point where the first user interface is displayed in the state in which the display is expanded, the electronic device may recognize that a second stroke corresponding to the second handwriting input is related to the last stroke among the at least one first stroke. According to one embodiment, the electronic device may set a property of the last stroke among the at least one first stroke to be the same as that of the second stroke. For example, the property of the stroke may include at least one of a type of a pen, a thickness value of the pen, and/or a color of the pen. According to one embodiment, the electronic device may recognize the last stroke among the at least one first stroke and the second stroke as one stroke.

According to one embodiment, in operation 1260, the electronic device may connect the second stroke to the last stroke and display the connected stroke on the expanded display. According to one embodiment, the electronic device may connect the last stroke among the at least one first stroke to the second stroke so as to be visually smooth. According to one embodiment, the electronic device may display the one recognized stroke on the display so as to be visually recognized as one stroke. According to one embodiment, when a form factor of the electronic device or a size of the display changes, the electronic device may display strokes respectively input before and after the change on the display so as to be recognized as one stroke, thereby providing the user with a continuous use experience.

An operating method of an electronic device (e.g., the electronic device 101 in FIGS. 1 to 3, the electronic device 400 in FIG. 4, the electronic device 500 in FIG. 5, the electronic device 600 in FIG. 6, the electronic device 700 in FIG. 7, the electronic device 900 in FIG. 9, the electronic device described with reference to FIGS. 10A to 10B, or the electronic device described with reference to FIGS. 11 to 12) including a display (e.g., the display module 160 in FIGS. 1 to 3, the display 430 in FIG. 4, the display 510 in FIG. 5, the display 610 in FIG. 6, the display 710 in FIG. 7, or the display 910 in FIG. 9) capable of being reduced or expanded may include recognizing a first handwriting input received from a user via the display in a reduced state, displaying at least one first stroke corresponding to the received first handwriting input on the display in the reduced state, expanding the display based on a specified input, displaying a first user interface indicating a last stroke among the at least one first stroke in an expanded state of the display, recognizing a second stroke corresponding to a second handwriting input as related to the last stroke among the at least one first stroke when the second handwriting input is received within a specified distance from a point where the first user interface is displayed in the expanded state of the display, and displaying the second stroke so as to be connected to the last stroke on the expanded display.

According to one embodiment, the recognizing of the second stroke as related to the last stroke may include setting a property of the second stroke to be the same as a property of the last stroke among the at least one first stroke.

According to one embodiment, the property may include at least one of a type of a pen, a thickness value of the pen, and a color of the pen.

According to one embodiment, the displaying of the second stroke so as to be connected to the last stroke on the expanded display may include moving the second stroke such that at least a portion of the second stroke is displayed at a point where input of the last stroke ends.

According to one embodiment, the recognizing of the second stroke as related to the last stroke may include recognizing the second stroke and the last stroke as one stroke, and the displaying of the second stroke so as to be connected to the last stroke on the expanded display may include displaying the recognized one stroke on the expanded display.

According to one embodiment, the displaying of the second stroke so as to be connected to the last stroke on the expanded display may include adding a third stroke having the same property as the last stroke between the last stroke and the second stroke and displaying the third stroke on the expanded display.

According to one embodiment, the method may further include displaying first text data on the display in the reduced state, and displaying a second user interface that distinguishes second text data additionally displayed on the display in the expanded state from the first text data when the display is changed to the expanded state based on the specified input.

According to one embodiment, the method may further include displaying an execution screen containing at least one content on the display in the reduced state, and scrolling the execution screen of the display such that, when at least some contents among the contents displayed on the display in the reduced state are not displayed in the expanded state of the display, the at least some contents are displayed on the display in the expanded state.

According to one embodiment, the scrolling of the execution screen may include scrolling the execution screen such that the at least some contents are positioned at a lower end of a display area of the display in the expanded state.

According to one embodiment, the method may further include changing a color of the last stroke or applying a visual effect including a blinking effect to the last stroke.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display capable of being expanded and reduced;
a memory; and
a processor operatively connected to the display and the memory,
wherein the memory includes instructions that, when executed, cause the processor to:
recognize a first handwriting input received from a user via the display in a reduced state;
display at least one first stroke corresponding to the received first handwriting input on the display in the reduced state;
change the display to an expanded state based on a specified input;
display a first user interface indicating a last stroke among the at least one first stroke in the expanded state of the display;
recognize a second stroke corresponding to a second handwriting input as related to the last stroke among the at least one first stroke when the second handwriting input is received from the user within a specified distance from a point where the first user interface is displayed in the expanded state of the display; and
display the second stroke so as to be connected to the last stroke on the expanded display.

2. The electronic device of claim 1, wherein the instructions cause the processor to:
set a property of the second stroke to be the same as a property of the last stroke among the at least one first stroke.

3. The electronic device of claim 2, wherein the property includes at least one of a type of a pen, a thickness value of the pen, and a color of the pen.

4. The electronic device of claim 1, wherein the instructions cause the processor to:
move the second stroke such that at least a portion of the second stroke is displayed at a point where input of the last stroke ends.

5. The electronic device of claim 1, wherein the instructions cause the processor to:
recognize the second stroke and the last stroke as one stroke; and
display the recognized one stroke on the expanded display.

6. The electronic device of claim 1, wherein the instructions cause the processor to:
add a third stroke having the same property as the last stroke between the last stroke and the second stroke and display the third stroke on the expanded display.

7. The electronic device of claim 1, wherein the instructions cause the processor to:
display first text data on the display in the reduced state; and
display a second user interface configured to distinguish second text data additionally displayed on the display in the expanded state from the first text data when the display is changed to the expanded state based on the specified input.

8. The electronic device of claim 1, wherein the instructions cause the processor to:
display an execution screen containing at least one content on the display in the reduced state; and
scroll the execution screen of the display such that, when at least some contents among the contents displayed on the display in the reduced state are not displayed in the expanded state of the display, the at least some contents are displayed on the display in the expanded state.

9. The electronic device of claim 8, wherein the instructions cause the processor to:
scroll the execution screen such that the at least some contents are positioned at a lower end of a display area of the display in the expanded state.

10. The electronic device of claim 1, wherein the instructions cause the processor to:
change a color of the last stroke or apply a visual effect including a blinking effect to the last stroke.

11. An operating method of an electronic device including a display capable of being reduced or expanded, the method comprising:
recognizing a first handwriting input received from a user via the display in a reduced state;
displaying at least one first stroke corresponding to the received first handwriting input on the display in the reduced state;
expanding the display based on a specified input;
displaying a first user interface indicating a last stroke among the at least one first stroke in an expanded state of the display;
recognizing a second stroke corresponding to a second handwriting input as related to the last stroke among the at least one first stroke when the second handwriting input is received within a specified distance from a point where the first user interface is displayed in the expanded state of the display; and
displaying the second stroke so as to be connected to the last stroke on the expanded display.

12. The method of claim 11, wherein the recognizing of the second stroke as related to the last stroke includes:
setting a property of the second stroke to be the same as a property of the last stroke among the at least one first stroke.

13. The method of claim 11, wherein the displaying of the second stroke so as to be connected to the last stroke on the expanded display includes:
moving the second stroke such that at least a portion of the second stroke is displayed at a point where input of the last stroke ends.

14. The method of claim 11, wherein the recognizing of the second stroke as related to the last stroke includes:
recognizing the second stroke and the last stroke as one stroke,
wherein the displaying of the second stroke so as to be connected to the last stroke on the expanded display includes:
displaying the recognized one stroke on the expanded display.

15. The method of claim 11, wherein the displaying of the second stroke so as to be connected to the last stroke on the expanded display includes:
adding a third stroke having the same property as the last stroke between the last stroke and the second stroke and displaying the third stroke on the expanded display.
